Europäisches Patentamt

European Patent Office

Office européen des brevets

(19)

(11) Veröffentlichungsnummer: **0 032 231**
**A2**

(12) ## EUROPÄISCHE PATENTANMELDUNG

(21) Anmeldenummer: **80108130.8**

(22) Anmeldetag: **22.12.80**

(51) Int. Cl.³: **G 11 B 5/55**

(30) Priorität: **11.01.80 US 111226**

(43) Veröffentlichungstag der Anmeldung:
**22.07.81 Patentblatt 81 29**

(84) Benannte Vertragsstaaten:
**AT DE FR GB IT NL SE**

(71) Anmelder: **SIEMENS AKTIENGESELLSCHAFT Berlin und München**
**Postfach 22 02 61**
**D-8000 München 22(DE)**

(72) Erfinder: **Kukreja, Jagmohan, Singh**
**585 West Redland Avenue**
**Claremont California 91711(US)**

(54) **Positioniereinrichtung für ein Disketten-Laufwerk.**

(57) Die Erfindung bezieht sich auf eine Positioniereinrichtung für Disketten-Laufwerke (10), bei denen ein Magnetkopf (20) auf einem sich in radialer Richtung zu einer biegsamen Magnetscheibe verschiebbaren Wagen (16) angeordnet ist.
Der Wagen (16) wird durch eine mit einem Schneckengewinde versehene Spindel (24) verschoben, die mit einer am Wagen (16) angeordneten Gewindemutter (26) in Eingriff steht. Ein Schrittmotor (22) treibt die Spindel (24) an. Der Schrittmotor (22) enthält einen als Permanentmagnet ausgebildeten Rotor (50), in dem koaxial die Spindle (24) befestigt ist. Zur Lagerung der Spindel (24) und des Rotors (50) sind zwei Lager (38,40) vorgesehen, wovon das eine in der Nähe des Rotors (50) und das andere am freien Ende der Spindel (24) angeordnet ist.

FIG 1

SIEMENS AKTIENGESELLSCHAFT      Unser Zeichen
Berlin und München              VPA 80 P 8202 E

## Positioniereinrichtung für ein Disketten-Laufwerk

Die Erfindung bezieht sich auf eine Positioniereinrichtung für ein Disketten-Laufwerk, bei der ein wenigstens einen Magnetkopf tragender Wagen vorgesehen ist, der in radialer Richtung einer rotierenden, biegsamen Magnetscheibe verschiebbar ist, bei der der Magnetkopf auf auswählbare Spuren auf wenigstens einer Seite der Magnetplatte durch die Verschiebung des Wagens positionierbar ist und bei der die Verschiebung des Wagens durch eine motorisch angetriebene, mit einem Schneckengewinde versehene Spindel erfolgt, die mit einer mit dem Wagen verbundenen Gewindemutter in Eingriff steht und die durch einen Schrittmotor angetrieben wird.

Im Handel erhältliche Disketten-Laufwerke enthalten eine Antriebseinrichtung für eine biegsame Magnetscheibe und eine davon getrennte Positioniereinrichtung, die Magnetköpfe aufnimmt und deren Lage bezüglich der drehenden Magnetscheibe verändert. In einem bekannten Diskettenlaufwerk enthält die Positioniereinrichtung einen Wagen, der in radialer Richtung der Magnetscheibe verschiebbar ist, so daß die Magnetköpfe mit großer Genauigkeit bezüglich der Spuren auf der Magnetscheibe positioniert werden können.

Die US-PS 4,139,877 offenbart eine Positioniereinrichtung für einen Magnetkopf. Die Positioniereinrichtung enthält einen Wagen, an dem der Magnetkopf befestigt ist und der unter Verwendung eines Schrittmotors und einer an diesem koaxial befestigten Spindel mit einem Schneckengewinde

Ret 1 Kdg / 1o.Okt. 1980

verschoben wird. Bei einer Drehung der Spindel wird der Wagen, zusammen mit den daran befestigten Magnetköpfen, in radialer Richtung der rotierenden Magnetscheibe verschoben. Durch eine Steuerung der Schritte des Schrittmotors kann eine Übertragung von Daten von und auf auswählbare Spuren auf der Magnetscheibe erfolgen.

Üblicherweise sind für die Lagerung der Spindel und des Schrittmotors insgesamt drei Lager vorgesehen: eines auf jeder Seite des Rotors im Schrittmotor und ein drittes an dem vom Motor am weitesten entfernten Ende der Spindel. Diese Lagerung erfordert entweder eine genaue Ausrichtung derart, daß alle drei Lager entlang einer gemeinsamen Achse angeordnet sind oder eine gelenkige Verbindungsstelle an dem Punkt, an dem die Achse des Rotors des Schrittmotors mit der Spindel verbunden ist.

Der Erfindung liegt daher die Aufgabe zugrunde, eine Positioniereinrichtung für ein Disketten-Laufwerk anzugeben, bei der die den Wagen verschiebende Spindel auf einfache Weise justiert werden kann.

Erfindungsgemäß wird die Aufgabe bei der Positioniereinrichtung der eingangs genannten Art dadurch gelöst, daß die Spindel koaxial zu einem als Permanentmagnet ausgebildeten Rotor des Schrittmotors angeordnet ist, daß die Spindel und der Rotor in nur zwei Lagern gelagert sind, wovon das eine Lager zur drehbaren Lagerung des Rotors und der Spindel in unmittelbarer Nähe des Rotors vorgesehen ist und das andere Lager am anderen Ende zur drehbaren Lagerung der Spindel vorgesehen ist.

Die Positioniereinrichtung gemäß der Erfindung hat den Vorteil, daß eine gelenkige oder elastische Verbindung zwischen der Spindel und dem Schrittmotor nicht erforderlich ist, daß sie einen geringeren Aufwand erfordert und daß der Zusammenbau des Disketten-Laufwerks erleichtert wird. Weiterhin ermöglicht die Positioniereinrichtung gemäß der Erfindung die Verwendung eines kostengünstigen Schrittmotors mit einem als Permanentmagnet ausgebildeten Rotor.

Zweckmäßigerweise ist das eine Lager auf der dem Wagen zugewandten Seite des Rotors angeordnet.

Zur Vereinfachung der Herstellung der Spindel ist es vorteilhaft, wenn sich das Schneckengewinde von einem Ende zum anderen Ende der Spindel erstreckt und wenn wenigstens eines der beiden Lager das Schneckengewinde umfaßt. Besonders vorteilhaft ist es, wenn beide Lager das Schneckengewinde umfassen.

Eine einfache Montage wird erreicht, wenn sich die Spindel koaxial durch den Rotor erstreckt und/oder wenn die Lager mit Flanschen versehen sind.

Zum Vermeiden eines Spiels zwischen dem Schrittmotor und der Spindel ist es vorteilhaft, wenn zwischen dem Rotor und dem einen Lager eine Schraubenfeder angeordnet ist.

Ein Ausführungsbeispiel der Positioniereinrichtung wird im folgenden anhand von Zeichnungen erläutert. Es zeigen:

Fig. 1 eine Draufsicht auf ein mit der Positioniereinrichtung versehenes Disketten-Laufwerk,

Fig. 2 ein Schnittbild eines Schrittmotors und eine mit diesem verbundene Spindel,

Fig. 3 eine detaillierte Ansicht der Lagerung der
Spindel,

Fig. 4 eine detaillierte Ansicht der Lagerung der
Spindel und des Rotors des Schrittmotors,

Fig. 5 ein Verdrahtungsschema des Schrittmotors.

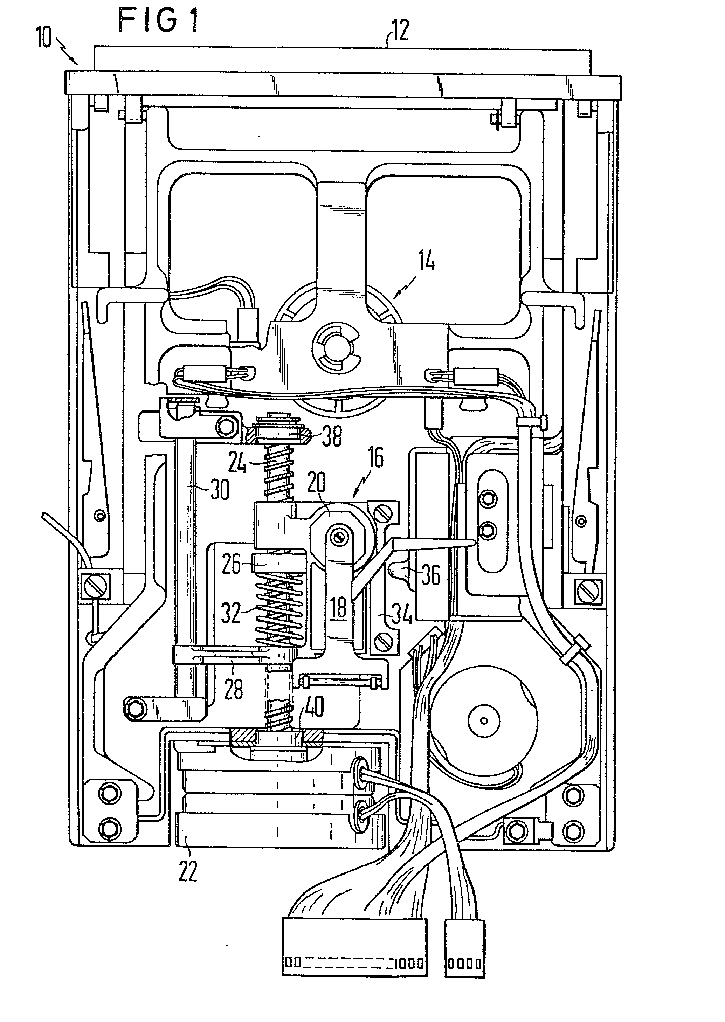

Das in Figur 1 in seiner Draufsicht dargestellte Disketten-Laufwerk 10 hat an einer Seite eine Öffnung 12, durch die eine biegsame Magnetscheibe einschiebbar ist. Mit Hilfe einer Klemmvorrichtung 14 wird die Magnetscheibe zentrisch gehalten und während des Betriebes angetrieben. Für eine Übertragung von Daten von und auf auswählbare Spuren auf der Magnetscheibe ist eine Positioniereinrichtung vorgesehen. Die Positioniereinrichtung enthält einen Wagen 16, der mindestens einen Arm 18 trägt, an dem ein als Schreib-Lesekopf ausgebildeter Magnetkopf 20 angeordnet ist. Der Wagen 16 wird in radialer Richtung der zentrisch angetriebenen Magnetscheibe mittels eines Schrittmotors 22 und einer mit einem Schneckengewinde versehenen Spindel 24 verschoben. Die Drehbewegung der Spindel 24 wird in eine lineare Bewegung des Wagens 16 durch eine Gewindemutter 26 umgesetzt, die mit dem Wagen 16 verbunden ist und mit dem Schneckengewinde auf der Spindel 24 in Eingriff steht. Eine Drehung des Wagens 16 durch die Spindel 24 wird durch einen Arm 28 verhindert, der verschiebbar auf einer Führungsstange 30 gelagert ist. Die Führungsstange 30 ist an ihren Enden am Disketten-Laufwerk 10 festgeklemmt. Eine Schraubenfeder 32 ist vorgesehen, um ein Spiel zwischen der Gewindemutter 26 und der Spindel 24 zu vermeiden. Ein Anschlag 34 und eine Nase 36 sind am Disketten-Laufwerk 10 vorgesehen, um die Bewegung des Wagens 16 in radialer Richtung zu begrenzen.

Der Schrittmotor 22 im Disketten-Laufwerk 10 weist einen als Permanentmagnet ausgebildeten Rotor 50 auf. Ein derartiger Schrittmotor 22 ist beispielsweise im Handel von der Firma North American Philips Controls Corp., Cheshire, Connecticut, unter der Bezeichnung "Serie 82700" erhältlich. Ein geeigneter Motor hat einen Schrittwinkel von $7^{\circ}30'$, eine maximale Startfrequenz von 300 Schritten pro Sekunde ( 375 U/min) und einen Leistungsverbrauch von 8 Watt. Die Verdrahtung eines derartigen Motors ist in Figur 5 dargestellt.

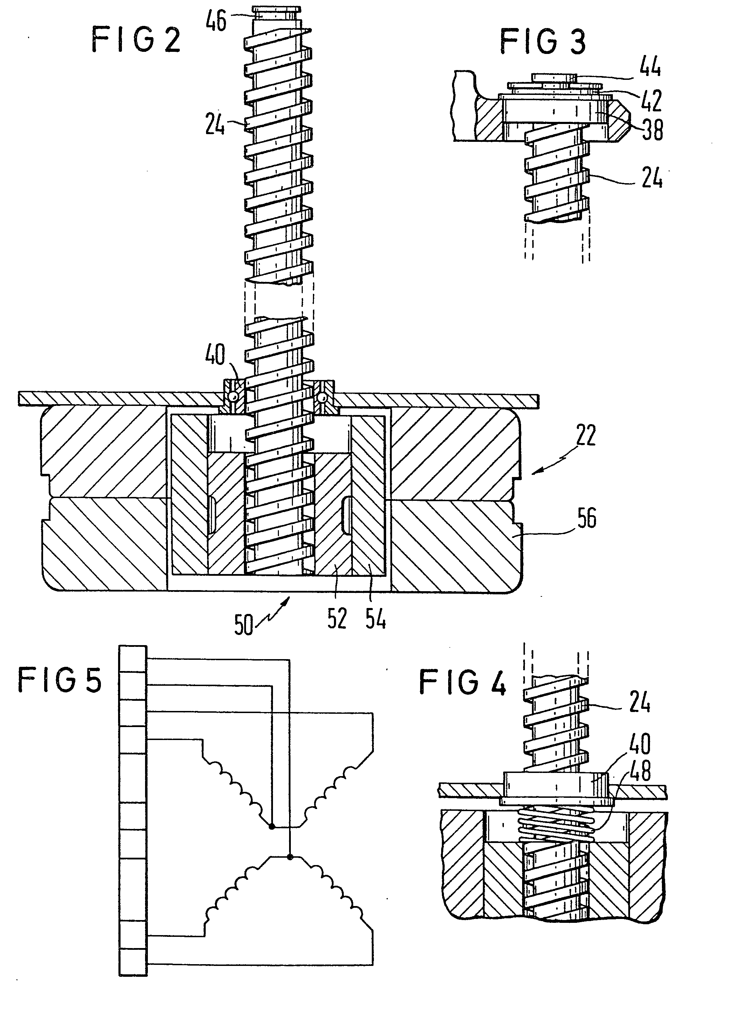

Wie in den Figuren 2 bis 4 detailliert dargestellt ist, sind die rotierenden Teile der Spindel 24 und des Schrittmotors 22 lediglich durch zwei Lager 38 und 40 gelagert. Das eine mit einem Flansch versehene Lager 40 ist in der Nähe des Schrittmotors 22 angeordnet, während das andere, ebenfalls mit einem Flansch versehene Lager 38 an dem freien Ende der Spindel 24, gegenüber dem Schrittmotor 22 angeordnet ist. Beide Lager 38 und 40 umfassen die Spindel 24 an einem mit dem Schneckengewinde versehenen Teil. Die axiale Justierung der Spindel 24 wird durch eine Scheibe 42 und einen Sperring 44 erreicht, der in eine Nut 46 am Ende der Spindel 24 eingreift. Im Schrittmotor 22 ist eine Feder 48 vorgesehen, die die Spindel 24 in axialer Richtung verspannt, um ein Spiel zu verhindern.

Die Spindel 24 trägt unmittelbar den als Permanentmagnet ausgebildeten Rotor 50 des Schrittmotors 22. Die Spindel ist in eine Buchse 52 eingepreßt, welche ihrerseits den Permanentmagneten 54 trägt. Diese Teile werden auch durch einen Klebstoff, beispielsweise einen Epoxidklebstoff, gehalten. Der Stator 56 des Schrittmotors 22, der die Windungen enthält, ist am Disketten-Laufwerk 10 starr befestigt, entweder durch Festklemmen oder durch einen Klebstoff.

7 Patentansprüche
5 Figuren

Patentansprüche

1. Positioniereinrichtung für ein Disketten-Laufwerk, bei der ein wenigstens einen Magnetkopf tragender Wagen vorgesehen ist, der in radialer Richtung einer rotierenden, biegsamen Magnetscheibe verschiebbar ist, bei der der Magnetkopf auf auswählbare Spuren auf wenigstens einer Seite der Magnetplatte durch die Verschiebung des Wagens positionierbar ist und bei der die Verschiebung des Wagens durch eine motorisch angetriebene, mit einem Schneckengewinde versehene Spindel erfolgt, die mit einer mit dem Wagen verbundenen Gewindemutter in Eingriff steht und die durch einen Schrittmotor angetrieben wird,
d a d u r c h   g e k e n n z e i c h n e t ,
daß die Spindel (24) koaxial zu einem als Permanentmagnet ausgebildeten Rotor (50) des Schrittmotors (22) angeordnet ist, daß die Spindel (24) und der Rotor (50) in nur zwei Lagern (38,40) gelagert sind, wovon das eine Lager (40) zur drehbaren Lagerung des Rotors (50) und der Spindel (24) in unmittelbarer Nähe des Rotors (50) vorgesehen ist und das andere Lager (38) am anderen Ende zur drehbaren Lagerung der Spindel (24) vorgesehen ist.

2. Positioniereinrichtung nach Anspruch 1,
d a d u r c h   g e k e n n z e i c h n e t ,
daß das eine Lager (40) auf der dem Wagen (16) zugewandten Seite des Rotors (50) angeordnet ist.

3. Positioniereinrichtung nach Anspruch 1 oder Anspruch 2,
d a d u r c h   g e k e n n z e i c h n e t ,
daß sich das Schneckengewinde von einem Ende zum anderen Ende der Spindel (24) erstreckt und daß wenigstens eines der beiden Lager (38,40) das Schneckengewinde umfaßt.

0032231

4. Positioniereinrichtung nach einem der Ansprüche 1 bis 3,

d a d u r c h    g e k e n n z e i c h n e t ,

daß beide Lager (38,40) das Schneckengewinde umfassen.

5. Positioniereinrichtung nach einem der Ansprüche 1 bis 4,

d a d u r c h    g e k e n n z e i c h n e t ,

daß sich die Spindel (24) koaxial durch den Rotor (50) erstreckt.

6. Positioniereinrichtung nach einem der Ansprüche 1 bis 5,

d a d u r c h    g e k e n n z e i c h n e t , daß die Lager (38,40) mit Flanschen versehen sind.

7. Positioniereinrichtung nach einem der Ansprüche 1 bis 6,

d a d u r c h    g e k e n n z e i c h n e t ,

daß zwischen dem Rotor (50) und dem einen Lager (40) eine Schraubenfeder (48)angeordnet ist.

FIG 1

1/2

0032231

FIG 2

FIG 3

FIG 5

FIG 4